(19) Europäisches Patentamt
European Patent Office
Office européen des brevets

(11) **EP 1 460 400 B1**

(12) **EUROPÄISCHE PATENTSCHRIFT**

(45) Veröffentlichungstag und Bekanntmachung des Hinweises auf die Patenterteilung:
**10.05.2006 Patentblatt 2006/19**

(51) Int Cl.:
*G01L 9/00* *(2006.01)*    *G01L 23/06* *(2006.01)*
*G01L 23/16* *(2006.01)*    *G01L 11/02* *(2006.01)*

(21) Anmeldenummer: **04001270.0**

(22) Anmeldetag: **22.01.2004**

(54) **Konfokaler faseroptischer Brennraumdrucksensor**

Confocal, fiber optic pressure sensor for a combustion chamber

Capteur de pression confocal à fibre optique pour une chambre de combustion

(84) Benannte Vertragsstaaten:
**DE FR GB**

(30) Priorität: **21.03.2003 DE 10312661**

(43) Veröffentlichungstag der Anmeldung:
**22.09.2004 Patentblatt 2004/39**

(73) Patentinhaber: **ROBERT BOSCH GMBH**
**70442 Stuttgart (DE)**

(72) Erfinder: **Qiu, Qiang**
**71254 Ditzingen (DE)**

(74) Vertreter: **Hörschler, Wolfram Johannes et al**
**Isenbruck, Bösl, Hörschler, Wichmann, Huhn**
**Patentanwälte**
**Theodor-Heuss-Anlage 12**
**68165 Mannheim (DE)**

(56) Entgegenhaltungen:
**US-A- 4 787 396**      **US-A- 6 064 630**

- **RAO Y J ET AL: "A PROTOTYPE FIBRE-OPTIC-BASED FIZEAU MEDICAL PRESSURE AND TEMPERATURE SENSOR SYSTEM USING COHERENCE READING" MEASUREMENT SCIENCE AND TECHNOLOGY, IOP PUBLISHING, BRISTOL, GB, Bd. 5, Nr. 6, 1. Juni 1994 (1994-06-01), Seiten 741-746, XP000456358 ISSN: 0957-0233**
- **PATENT ABSTRACTS OF JAPAN Bd. 0082, Nr. 19 (P-306), 5. Oktober 1984 (1984-10-05) & JP 59 104511 A (NIHON ITA GLASS KK), 16. Juni 1984 (1984-06-16)**

**Beschreibung**

Technisches Gebiet

In Verbrennungsmotoren von Kraftfahrzeugen ist eine Druckmessung zur Ermittlung des Brennraumdruckes erforderlich, um eine Information über die in den Brennraum der Verbrennungskraftmaschine jeweils herrschenden Drücke zu erhalten. Die Informationen über die in den Brennräumen jeweils herrschenden Drücke können zur Erfassung des Ist-Motormomentes und zur Überwachung der Verbrennung (Aussetzer, Klopfen) an modernen Motormanagementsystemen genutzt werden.

Stand der Technik

Aus dem Kraftfahrtechnischen Taschenbuch, 23. Auflage, Braunschweig; Wiesbaden Vieweg 1999, ISBN 3-528-03876-4, Seite 111 ist ein integrierter Silizium-Brennraumdrucksensor bekannt. Der Silizium-Brennraumdrucksensor umfasst einen Übertragungsstößel, ein Silizium-Podest, welches der Krafteinleitung dient sowie einen integrierten Silizium-Drucksensor. Ferner ist eine Pyrexschicht sowie ein Keramikzwischenträger vorgesehen, die übereinander liegend auf einer Stahlmontageplatte aufgenommen sind. An einer Seite der Stahlmontageplatte befindet sich ein oder mehrere Anschlussstifte, von der aus eine Verbindungsleitung zum integrierten Siliziumdrucksensor verläuft. Gemäß dieser Anordnung ist der Silizium-Chip den hohen Temperaturen in einem Brennraum nicht unmittelbar ausgesetzt. Dies wird durch eine metallische Trennmembran sowie einen angeschweißten Stößel ausreichender Länge erreicht. Durch das mikromechanische Aufbringen eines Podestes in der Membranmitte wird der Silizium-Chip zu einem Kraftsensor. Die von der Frontmembran aufgenommenen Druckkräfte werden über den Stößel mit nur geringer zusätzlicher Verfälschung über das Podest in den Sensor-Chip aus Silizium eingeleitet. Dieser befindet sich in einer zurückgezogenen Montageposition und ist somit nur noch Betriebstemperaturen unterhalb von 150°C ausgesetzt.

WO 97/31251A ist ein Brennraumdrucksensor zur Ermittlung von Klopferscheinungen und Zündaussetzern zu entnehmen. In eine Zündkerze ist ein faseroptischer Brennraumdrucksensor integriert. Dieser ist derart konfiguriert, dass der Zündkerzenkörper von einem Leiter durchzogen ist. Eine tassenförmig ausgebildete Membran mit einer ungleichmäßigen Dicke reduziert die auf die Membran wirkende mechanische Beanspruchung und steigert die Zuverlässigkeit des Sensors. Auftretende Überdrücke, die auf den Brennraumdrucksensor wirken, werden dadurch reduziert, dass an der Membran gewinkelte Abschnitte ausgebildet sind.

Ein faseroptischen Drucksensor mit Gradientenindexlinse ist aus der US-A-6 064 630 bekannt.

Mikromechanische Brennraumdrucksensoren haben sich in der Praxis als durchaus serienfähig erwiesen, sind jedoch mit wesentlichen Nachteilen behaftet. Die mikromechanischen Brennraumdrucksensoren weisen nur eine begrenzte thermische Festigkeit auf. Da die mikromechanischen Brennraumdrucksensoren jedoch möglichst nahe am Brennraum installiert werden müssen, sind sie höheren Temperaturen ausgesetzt, was entsprechende Anforderungen an die thermische Festigkeit solcher Brennraumsensoren stellt. Ferner weisen die bisher bekannten mikromechanischen Brennraumdrucksensoren den Nachteil auf, dass diesen nur begrenzt miniaturisierungsfähig sind. Dadurch erfordern die derzeit eingesetzten mikromechanischen Brennraumdrucksensoren größere Montierflächen im Bereich eines Zylinderkopfes einer Verbrennungskraftmaschine. Der Zylinderkopf einer Verbrennungskraftmaschine stellt jedoch einen Bereich der Verbrennungskraftmaschine dar, an welchem der Bauraum aufgrund der Vielzahl von Einbau- beziehungsweise Anbaukomponenten ohnehin schon begrenzt ist. Anstelle von bisher eingesetzten mikromechanischen Brennraumdrucksensoren kommen auch faseroptische Sensoren zum Einsatz. Faseroptische Sensoren weisen zum Beispiel einen Glasfasersensor auf, der aus zwei parallel zueinander angeordneten optischen Fasern besteht. In einer ersten Faser des Glaserfasersensors wird das eingekoppelte Licht zum Sensorkopf übertragen. Die Einkopplung des Lichts in die erste Faser des Glasfasersensors kann beispielsweise über eine LED erfolgen. Über die zweite Faser des Glasfasersensors wird das Nutzsignal zurücktransportiert. Das aus der ersten Faser austretende Licht trifft am Sensorkopf auf eine der Austrittsseite der Faser gegenüberliegend angeordnete Membran. Die Membran wandelt den im Brennraum herrschenden Druck in eine mechanische Auslenkbewegung um. Das von der ausgelenkten Membran reflektierte Licht wird in die zweite Faser des Glasfasersensors eingekoppelt und am Ende dieser Faser durch eine Photodiode in ein elektrisches Signal umgewandelt. Das empfangene Nutzsignal ist abhängig vom Abstand zwischen dem Faserende der zweiten Faser und der ausgelenkten Membran, d.h. damit abhängig von im Brennraum einer Verbrennungskraftmaschine herrschenden Druckniveau. Dieses Sensorprinzip ist einfach aufgebaut, wobei insbesondere der Sensorkopf sehr klein gefertigt werden kann, was günstig hinsichtlich einer weiteren Miniaturisierung ist. Probleme hinsichtlich der thermischen Festigkeit treten nicht auf.

Darstellung der Erfindung

Mit der erfindungsgemäß vorgeschlagenen Lösung, so wie sie in den Ansprüchen 1-9 definiert ist, wird ein weiterer, nach dem faseroptischen Prinzip arbeitender Sensor bereitgestellt, der für eine Messung des im Brennraum eines Verbrennungsmotors herrschenden Druckes eingesetzt werden kann. Das vorgeschlagene Sensorprinzip macht sich das konfokale Messprinzip zu Nutze und zeichnet sich einerseits durch einen extrem einfachen Aufbau und andererseits durch niedrige Herstellkosten aus. Darüber hinaus kann das vorgeschlagene Sensorkonzept für Anwendungen in kleinsten zur Verfügung stehenden Bauräumen eingesetzt werden. Die vorgeschlagene Sensoranordnung ist äußerst robust gegen extrem harte Umwelteinflüsse, wie sie zum Beispiel in der Nähe eines Brennraumes eines Verbrennungsmotors auftreten. Die dort herrschenden Bedingungen hinsichtlich der Temperatur der mechanischen Schwingungen beziehungsweise Erschütterungen sowie hinsichtlich elektromagnetischer Quereinkopplungen stellen höchste Anforderungen an die Robustheit der Sensoranordnung. Ein Brennraumdrucksensor, welcher sich das konfokale Messprinzip zu Nutze macht, bietet äußerst vielfältige Einsatzmöglichkeiten. Die erfindungsgemäß vorgeschlagene Sensoranordnung umfasst eine Lichtquelle sowie einen Photodetektor, welche jeweils über eine Lichtleitfaser mit einem 3 dB-Koppler, insbesondere einem Y-Koppler, verbunden sind. Vom 3 dB-Koppler (Y-Koppler) erstreckt sich eine weitere Lichtleitfaser zu einem Sensorkopf, in dem eine Gradientenindexlinse (GRIN-Linse) aufgenommen ist. Einer Stirnseite der Gradientenindexlinse gegenüberliegend befindet sich die Membran, deren Auslenkung zu messen ist. Der mit dem 3 dB-Koppler, der bevorzugt als Y-Koppler ausgebildet ist, über eine Lichtleitfaser gekoppelte Photodetektor ist seinerseits über ein Signalinterface mit einer Auswerteeinheit verbunden.

Bei der vorgeschlagenen Sensoranordnung dient ein und dieselbe Lichtleitfaser sowohl für die Übertragung des Lichts zum Sensorkopf als auch für die Erzeugung sowie für die Rückführung des konfokalen Messsignals. Die Faserendfläche der Lichtleitfaser wirkt wie ein Raumfilter, so dass sich nur spektrale und örtlich begrenzte Lichtanteile wieder in die Lichtleitfaser einkoppeln lassen. Daher wird die Sensoranordnung in der Literatur auch als "intrinsischer Sensor" bezeichnet.

Die eingesetzte Gradientenindexlinse (GRIN) kann in die Miniaturisierung der Sensoranordnung begünstigenderweise als eine sehr kleine und kostengünstig herstellbare Zylinderstablinse ausgeführt sein, welche beispielsweise für die Ein- und Auskopplung des Lichts in die beziehungsweise aus der Lichtleitfaser eingesetzt werden kann. Dies ermöglicht eine extrem kompakte und kostengünstige Bauweise des Sensorkopfes.

Das zurückgekoppelte Signal erreicht sein Maximum, wenn sich die auslenkbare Membran mit gut reflektierender, glatter Oberfläche exakt auf der Bildebene der Lichtleitfaser durch die Linse befindet. Die Tiefenauflösung des Sensors $\Delta z$ entspricht der Abstandsänderung, wobei das Sensorsignal um die Hälfte vom Maximum abgesenkt ist. Je nachdem, ob Multimoden-Fasern oder Monomode-Fasern eingesetzt werden, kann die Tiefenauflösung $\Delta z$ des Sensors in einem weiteren Bereich variieren. Prinzipiell lässt sich die optische Auflösung des Sensors mit dünneren Fasern steigern. Als Lichtquelle wird generell eine LED eingesetzt.

Die Vorteile der erfindungsgemäß vorgeschlagenen Sensoranordnung gegenüber faseroptischen Reflexionssensoren liegen darin, dass deutlich geringere Primärlichtleistungen benötigt werden. Da es sich um ein abbildendes Mikroskopiesystem handelt, kann die LED-Beleuchtungseinheit viel kleiner dimensioniert werden, was einerseits Bauraum spart und gleichzeitig weniger Verlustleistung in der Ansteuerelektronik bedeutet. Die erfindungsgemäß vorgeschlagene Sensoranordnung weist eine günstige Kennlinien-Charakteristik aus. Im Messbereich variiert die Steigung des Messsignals gegenüber der Membranauslenkung nur moderat. Beim Reflexionssensor hingegen ähnelt die Kennlinie im Messbereich einer Exponentialfunktion, was den Nachteil aufweist, dass der Brennraumdruck bei sehr großen Gradienten nur sehr ungenau bestimmt werden kann. Die erfindungsgemäß vorgeschlagene Sensoranordnung ist unempfindlich gegenüber Fremdlichteinstreuung. Es sind keine gesonderten Lichtdämpfungsmaßnahmen im Innenraum des Sensorkopfes zu treffen. Der Sensorkopf selbst besitzt lediglich eine zentrisch angeordnete Lichtleitfaser. Einen eventuellen Faserversatz zur optischen Achse toleriert das System, da das aus der Lichtleitfaser austretende Licht durch die Abbildungslinse zur Bildebene, in der die auslenkbare Membran liegt, gelangt und genau den gleichen Weg zurück in die Faser findet. Ein Versatz der Faser zur optischen Achse ist für dieses konfokale Meßsystem nicht kritisch (selbsteinstellende Optik).

Zeichnung

Anhand der Zeichnung wird die Erfindung nachstehend eingehender beschrieben.
Es zeigt:

Figur 1    den schematischen Ausbau eines bekannten faseroptischen Reflexionssensors,

Figur 2    den prinzipiellen Aufbau des erfindungsgemäß vorgeschlagenen konfokalen faseroptischen Sensors,

Figur 3    eine schematische Querschnittsdarstellung des Sensorkopfes der erfindungsgemäßen Sensoranordnung und

Figur 4    den typischen Signalverlauf der Sensoranordnung in Abhängigkeit des Abstandes der Lichtleitfaser zur auslenkbaren Membran.

Ausführungsvarianten

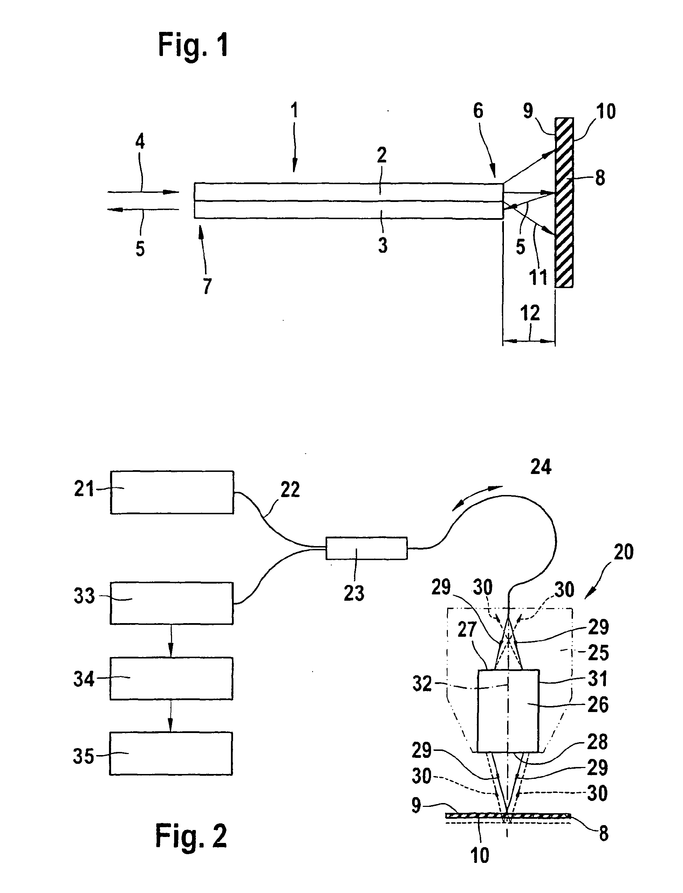

Figur 1 ist die Darstellung eines bekannten faseroptischen Reflexionssensors in schematischer Wiedergabe zu entnehmen.
Der in Figur 1 dargestellte Glasfasersensor 1 umfasst eine erste optische Faser 2 und eine zweite optische Faser 3. In die erste optische Faser 2 wird an einem Sensorende 7 eine Strahlung 4 eingekoppelt. Im Bereich des Sensorkopfes 6 tritt die eingekoppelte Strahlung 4 als austretende Strahlung 11 aus und trifft auf eine erste Membranseite 9 einer auslenkbaren Membran 8, deren einem Brennraum beispielsweise zuweisende zweite Membranseite mit Bezugszeichen 10 gekennzeichnet ist. Die auslenkbare Membran 8 ist in eine Wandung eines Raumes integriert, in dem stark schwankende Drücke auftreten. Je nach Auslenkung der auslenkbaren Membran 8 wird reflektierte Strahlung 5 in die zweite optische Faser 3 des Glasfasersensors 1 im Bereich des Sensorkopfes 6 eingekoppelt. Am Ende der zweiten optischen Faser 3 trifft die reflektierte Strahlung 5 auf eine Photodiode, in der sie in ein elektrisches Signal umgewandelt wird. Das empfangene Signal ist abhängig vom Abstand 12 zwischen dem Faserende, d.h. dem Sensorkopf 6 und der entsprechend des im Raum herrschenden Druckes ausgelenkten Membran 8.

Figur 2 ist eine schematische Darstellung der erfindungsgemäßen konfokalen faseroptischen Sensoranordnung zu entnehmen.

Es ist ein konfokaler faseroptischer Sensor 20 dargestellt, dem eine Lichtquelle 21 zugeordnet ist. Die Lichtquelle 21 wird durch eine LED-Beleuchtungseinheit gebildet, die sehr klein dimensioniert werden kann. Der Lichtquelle 21 ist eine Einkopplungsleitung 22 zugeordnet, über welche das von der Lichtquelle 21 ausgehende Licht einem Y-Koppler 23 zugeführt wird. Der Y-Koppler 23 umfasst drei Ein-/Ausgänge, über welchen die Strahlung ausgesandt beziehungsweise zurückgeführt werden kann, während bei einem 3 dB-Koppler dazu vier Ein-/Ausgänge erforderlich sind.

Vom Y-Koppler 23, der bevorzugt eingesetzt wird, wird das Licht in eine bidirektional genutzte Lichtleitfaser 24 eingekoppelt, über welche der Y-Koppler 23 mit einem Sensorkopf 25 mit Linse in Verbindung steht.

Innerhalb des Messkopfes 25 mit Linse ist in einer Fassung 31 eine Linse 26 aufgenommen. Diese Linse 26 ist bevorzugt als eine kleine und kostengünstig herstellbare Gradientenindexlinse beschaffen. Die eingesetzte, bevorzugt zylinderstabförmig ausgebildete Gradientenindexlinse 26 weist einen Durchmesser von lediglich 1 mm auf. An deren erster Stirnseite 27 wird das aus der Lichtleitfaser 24 über den Y-Koppler 23 und die Lichtquelle 21 nebst Einkopplungsleitung 22 austretende Strahlung 29 in die Linse 26 eingekoppelt. Die Linse 26 ist symmetrisch bezüglich ihrer Symmetrieachse 32 aufgebaut und innerhalb einer Fassung 31 im Sensorkopf 25 mit Linse angeordnet. Bevorzugt wird die Linse 26 mit einer Klebverbindung 42 mit dem Gehäuse des Sensorkopfes 25 mit Linse befestigt. An ihrer zweiten Stirnseite 28, d.h. der auslenkbaren Membran 8 gegenüberliegend, tritt die in die Linse 26 an der ersten Stirnseite 27 eingekoppelte Strahlung 29 aus und trifft auf die erste Membranseite 9 der Membran 8. Die Membran 8 befindet sich, abhängig vom Druck in einem Raum, wie beispielsweise einem Brennraum, in einem Abstand zur zweiten Stirnseite 28 der zylinderstabförmig konfigurierten Gradientenindexlinse 26 des Sensorkopfes 25 mit Linse.

Von der ersten Membranseite 9 der auslenkbaren Membran 8 wird Strahlung 30 reflektiert. Diese trifft auf die zweite Stirnseite 28 der zylinderstabförmig konfigurierten Linse 26 und durchläuft die Gradientenindexlinse 26, bis sie an der ersten Stirnseite 27 aus dieser austritt und an einer Faserendfläche der Lichtleitfaser 24 wieder in diese eingekoppelt wird. Die Faserendfläche der Lichtleitfaser 24 wirkt wie ein Raumfilter, so dass nur spektral und örtlich begrenzte Lichtanteile wieder in die Lichtleitfaser 24 eingekoppelt werden und an den Y-Koppler 23 übertragen werden. Der Y-Koppler 23, an welchem die Einkopplungsleitung 22 für die Strahlung aufgenommen ist, überträgt die durch die Lichtleitfaser 24 reflektierte Strahlung 30 an einen Photodetektor 33, der beispielsweise in Gestalt einer Photodiode ausgebildet sein kann. Dem Photodetektor 33 ist ein Signalinterface 34 nachgeschaltet, welchem wiederum eine Auswertung 35 nachgeordnet ist, in welcher die im Photodetektor 33 umgewandelten elektrischen Signale der reflektierten Strahlung 30 ausgewertet werden können.

Hervorzuheben ist, dass die Sensoranordnung 20 eine konfokale Messanordnung darstellt, wobei ein und dieselbe Lichtleitfaser 24 sowohl für die Übertragung des Lichts zum Sensorkopf 25 mit Linse als auch für die Rückführung eines konfokalen Messsignals, d.h. der reflektierten Strahlung 30, genutzt wird.

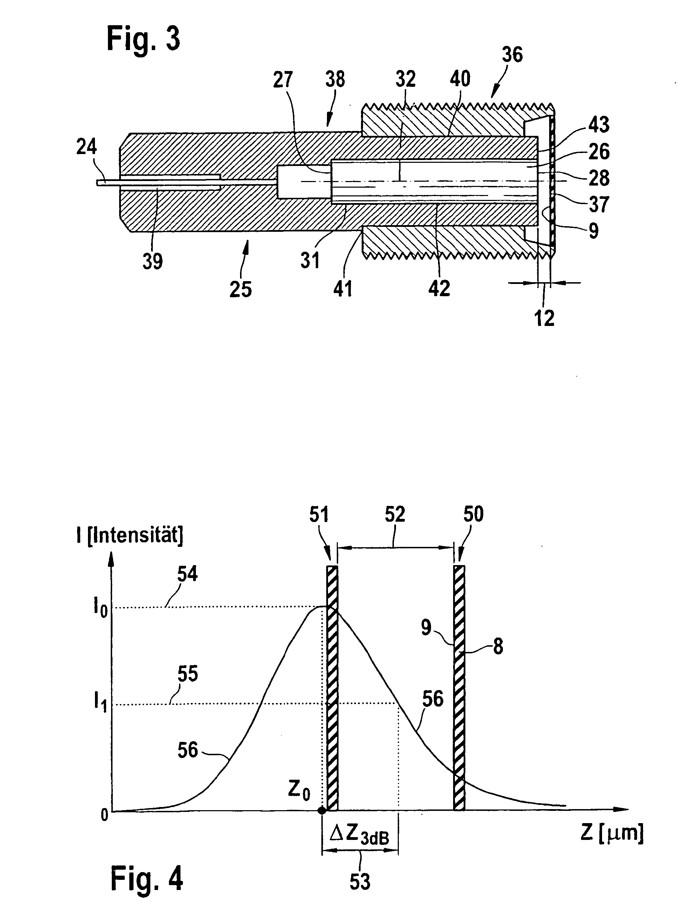

Aufgrund der kleinen Dimensionierung der bevorzugt zylinderstabförmig konfigurierten Gradientenindexlinse 26 lässt sich der Sensorkopf 25 mit Linse samt seiner Fassungshülsen 36, 38 (vgl. Darstellung gemäß Figur 3) mit einem Außendurchmesser von < 3 mm fertigen. Die zylinderstabförmig konfigurierte Gradientenindexlinse 26 lässt sich aufgrund ihrer Geometrie sehr einfach im Sensorkopf 25 mit Linse positionieren und ausrichten.

Figur 3 zeigt eine schematische Querschnittsdarstellung des Sensorkopfes mit Linse.

Wie Figur 3 entnommen werden kann, umfasst der Sensorkopf 25 mit Linse eine Innenhülse 38 sowie eine Außenhülse 36. In der Innenhülse 38 ist die Lichtleitfaser 24 aufgenommen; ferner befindet sich in der Innenhülse 38 ein Hohlraum, in welchen die bevorzugt zylinderstabförmig ausgebildete Gradientenindexlinse 26 in einer Fassung 31 liegt. Die erste Stirnseite 27 der zylinderstabförmig ausgebildeten Gradientenindexlinse 26 liegt der Faserendfläche der Lichtleitfaser 24 gegenüber. Die zweite Stirnseite 28 der zylinderstabförmig ausbildbaren Gradientenindexlinse 26 schließt bündig mit einer Stirnfläche 43 der Innenhülse 38 ab. Die Innenhülse 38 kann beispielsweise aus vollem Material in einem Arbeitsgang ausgedreht werden und anschließend geschliffen werden. Die Innenhülse 38 umfasst einen Hohlraum 39, durch welchen die Lichtleitfaser 24 geführt ist. Der Hohlraum 39 kann zum Schutz der Lichtleitfaser 24 gegen Beschädigungen mit einem Silikon- oder einem elastischen, temperaturfesten Klebstoff (Kunstharz) versiegelt werden.

Die Innenhülse 38 ist von der Außenhülse 36 umschlossen. Die Außenhülse 36 kann an der Außenumfangsfläche der Innenhülse 38 mittels eines Presssitzes 40 aufgenommen sein. An ihrer Außenumfangsfläche umfasst die Außenhülse 36 ein Außengewinde, mit welchem der Sensorkopf 25 mit Linse am Zylinderkopf einer Verbrennungskraftmaschine befestigt werden kann. Die Außenhülse 36 mit Außengewinde enthält ein Membranteil 37, dessen erste Membranseite 9 der zweiten Stirnseite 28 der bevorzugt zylinderstabförmig konfigurierten Gradientenindexlinse 26 gegenüberliegt. Der Abstand zwischen der zweiten Stirnseite 28 der bevorzugt zylinderstabförmig konfigurierten Gradientenindexlinse 26 und der ersten Membranseite 9 des auslenkbaren Membranteils 37 ist durch Bezugszeichen 12 identifiziert. Die Position der Außenhülse 36 mit integriertem auslenkbaren Membranteil 37 am Presssitz 40 relativ zur Innenhülse 28 des Sensorkopfes 25 mit Linse wird durch einen Anschlag 41 gebildet, der beispielsweise als Durchmessersprung gefertigt werden kann, um einen definierten Sitz der Außenhülse 36 mit auslenkbarem Membranteil 37 und Außengewinde relativ zur Innenhülse 38 zu gewährleisten. Dadurch bildet der Sensorkopf 25 mit Linse in sich eine feste Einheit. In der Innenhülse 38 ist die Bohrung, in welcher die Lichtleitfaser 24 aufgenommen ist, als eine lediglich wenige Zehntel mm weite, dem Durchmesser des Fasermantels der Lichtleitfaser 24 entsprechende Bohrung ausgebildet. Der Führungsabschnitt der Lichtleitfaser 24 durch die Innenhülse 38, d.h. die Führungslänge durch den Hohlraum 39, sowie durch das Vollmaterial der Innenhülse 38 dient dem mechanischen Schutz der Lichtleitfaser 24.

Die optische Lichtleitfaser 24 ist an der Faserendfläche, die der ersten Stirnseite 27 der zylinderstabförmig konfigurierten Gradientenindexlinse 26 gegenüberliegt, gebrochen und wird ohne zusätzlichen Schleifvorgang in die in der Innenhülse 38 vorgesehene Bohrung eingeführt. Durch die gewählte Konfiguration, d.h. die symmetrische Anordnung der Lichtleitfaser 24 und der bevorzugt zylinderstabförmig ausbildbaren Gradientenindexlinse 26 ist keine optische Justage erforderlich. Das aus der Lichtleitfaser 24 an der Faserendfläche, die der ersten Stirnseite 27 gegenüberliegt, austretende Licht 29 wird durch die bevorzugt zylinderstabförmig ausgebildete Gradientenindexlinse 26 zur Bildebene übertragen, welche durch die erste Membranseite 9 des auslenkbaren Membranteils 37 gebildet ist. Das von der ersten Membranseite 9 des auslenkbaren Membranteils 37 reflektierte Licht gelangt auf dem gleichen Wege zurück in die Faserendfläche der Lichtleitfaser 24 entsprechend der Darstellung in Figur 2. Ein Versatz der Lichtleitfaser 24 zur optischen Achse der bevorzugt zylinderstabförmig ausgebildeten Gradientenindexlinse 26 ist nicht kritisch; es handelt sich um eine selbsteinstellende Optik.

Figur 4 ist das Sensorsignal als Funktion des Membranabstandes zum Faserende der Lichtleitfaser zu entnehmen.

Das in die Lichtleitfaser 24 zurückgekoppelte Signal, d.h. die reflektierte Strahlung erreicht ihr Maximum, wenn sich die auslenkbare Membran 8, 37 mit ihrer ersten Membranseite 9 exakt in der Bildebene der Lichtleitfaser 24 durch die Gradientenindexlinse 26 befindet. Die Tiefenauflösung 53 $\Delta z_{3dB}$ entspricht der Abstandsänderung zwischen der ersten Membranseite 9 und dem Faserende der Lichtleitfaser 24. Das Sensorsignal 55 (50% des Signalmaximums) ist in Bezug auf das Signalmaximum 54 (100%) in der Darstellung gemäß Figur 4 um die Hälfte abgesenkt. Die Tiefenauflösung 53 beträgt bei Multimoden-Fasern als Lichtleitfasern 24:

$$\frac{M \cdot a}{A_N}$$ bei Stufenprofilfasern, die eine stufenförmig verlaufende Brechungsindexverteilung über ihren Querschnitt aus Mantel und Kern aufweisen und

$$\frac{M \cdot a}{A_N} N$$ bei Parabelprofilfasern, die eine abgeflachte, parabelförmig verlaufende Brechungsindexverteilung aufweisen,mit

M = Abbildungsmaßstab der Linse 26
a = Radius des Faserkerns der Lichtleitfaser 24
AN = numerische Apertur der Linse 26.

Bei Einsatz von Monomode-Fasern als Lichtleitfasern 24 lässt sich die Auflösung der Sensoranordnung bis in den Sub-Mikrometerbereich steigern. Die vom Sensor 25 mit Linse auflösbare maximale Auslenkung der auslenkbaren Membran 8, 37 beträgt entsprechend des Messbereiches 52 etwa das Doppelte der Tiefenauflösung 53 des Sensors.

Der Messbereich 52 der erfindungsgemäß vorgeschlagenen Sensoranordnung wird nachfolgend anhand eines Zahlenbeispiels kurz umrissen:

Eine als Lichtleitfaser 24 eingesetzte Profilfaser mit einem Radius des Faserkerns a = 25 $\mu$m, einer 0,25-Gradientenindexlinse 26 mit einer Standardapertur AN = 0,46 sowie einem Abbildungsmaßstab von 0,2 führt gemäß der oben angegebenen Beziehung zu einer theoretischen Tiefenauflösung 53 von $\Delta z_{3dB}$ = 9,4 $\mu$m. Damit beträgt die maximal messbare Auslenkung der auslenkbaren Membran 8,37 etwa 18,7 $\mu$m.

Besonders vorteilhaft ist die aus Figur 4 hervorgehende, im Messbereich 52 linear verlaufende Kennlinie 56 des Signalverlaufs. Innerhalb des Messbereichs 52 variiert die Steigung des Messsignals gegenüber der Membranauslenkung nur geringfügig, wohingegen sie bei Reflexionssensoren, deren Kennlinie im Messbereich 52 einer Exponentialfunktion entsprechend verläuft, durch sehr große Gradienten gekennzeichnet ist, was zu ungenauen Brennraumdruckbestimmungen führt. Gemäß des oben angegebenen Zahlenbeispiels lassen sich bei den gegebenen Zahlenwerten für die Lichtleitfaser 24 sowie die bevorzugt in Zylinderstabform ausgeführte Gradientenindexlinse 26 eine Auslenkung der Membran 8,37 von ihrer Ruhelage 50 in eine ausgelenkte Lage 51 von 18,7 $\mu$m messen. Je nach Dimensionierung der Membran 8,37 hinsichtlich ihrer Dicke, Steifigkeit und ihres Querschnittes kann eine Auslenkung der Membran 8,37 um einen Auslenkeweg von 1 μm auf einen Druck von 10 bar beziehungsweise 50 bar im Inneren des Brennraumes hindeuten, so dass entsprechend der Auslegung der eingesetzten Membran 8,37 verschiedenste Druckbereiche detektierbar sind.

Die in den Figuren 2 und 3 dargestellte erfindungsgemäß vorgeschlagene Sensoranordnung bietet unter Verwirklichung des konfokalen Messprinzips den Vorteil einer geringeren Primärlichtleistung, die durch die Lichtquelle 21 (LED) aufzubringen ist. Die Lichtquelle 21 kann demzufolge wesentlich kleiner dimensioniert werden, verglichen zu bisherigen Anordnungen. Dies spart einerseits Kosten und generiert andererseits weniger Verlustleistung in der Ansteuerelektronik der erfindungsgemäß vorgeschlagenen Sensoranordnung. Aufgrund der günstigen Charakteristik der Kennlinie 56 innerhalb des Messbereiches 52 variiert die Steigung des Messsignals gegenüber den tatsächlichen Membranauslenkungen der auslenkbaren Membran 8, 37 nur geringfügig. Die dargestellte Sensorkopfanordnung (vgl. Figur 3) ist unempfindlich gegenüber Fremdlichteinstreuung, da die in der Innenhülse 38 aufgenommene, bevorzugt zylinderstabförmig ausgeführte Gradientenindexlinse 26 gegen Fremdlicht gekapselt ist. Daher sind zusätzliche, gesondert vorzusehende Lichtdämpfungsmaßnahmen im Innenraum des Sensorkopfes 25 mit Linse gemäß der Darstellung in Figur 3 obsolet. Der Sensorkopf 25 mit Linse umfasst lediglich eine zentrisch angeordnete Lichtleitfaser 24. Aufgrund des konfokalen Messprinzips lässt sich ein eventueller Versatz der Lichtleitfaser 24 zur optischen Achse 32 der bevorzugt in Zylinderstabform ausgebildeten Gradientenindexlinse 26 ohne weiteres tolerieren. Nachjustagevorgänge sind nicht erforderlich, da die aus der Lichtleitfaser 24 austretende Strahlung - sei es eine Parabelprofilfaser, sei es eine Stufenprofilfaser - durch die Gradientenindexlinse 26 zur Bildebene, d.h. zur ersten Membranseite 9 der auslenkbaren Membran 8, 37 gelangt und auf identischem Wege zurück in die Faserendfläche der Lichtleitfaser 24 fällt. Ein Versatz der Lichtleitfaser 24 zur optischen Achse 32 der bevorzugt in Zylinderstabform ausgebildeten Gradientenindexlinse 26 ist somit nicht kritisch.

Aufgrund der gewählten Anordnung, d.h. dem Gegenüberliegen der Faserendfläche der Lichtleitfaser 24 und der ersten Stirnseite 27 der bevorzugt in Zylinderstabform ausgebildeten Gradientenindexlinse 26 kann eine Polierung der Faserendfläche entfallen.

Die Lichtleitfasern 24 können sowohl als Monomode-Fasern als auch als Multimode-Fasern ausgebildet sein. Werden Multimode-Fasern als Lichtleitfasern 24 eingesetzt, so lässt sich einerseits eine hohe Anwenderfreundlichkeit erreichen und ein hoher Einkopplungswirkungsgrad, für das von einer LED-Anordnung ausgesandte Licht erreicht. Ferner sind als Lichtleitfasern 24 eingesetzte Multimode-Fasern erheblich preisgünstiger. Wird eine Multimode-Lichtleitfaser 24 eingesetzt, so stellt sich zwar in dieser eine Lichtverteilung mit höheren Ordnungen ein, was jedoch bei einer parallel verlaufenden optischen Achse unkritisch ist, da bei sehr dünnen Multimode-Lichtleitfasern 24 die Lichtanteile höherer Ordnungen unterdrückt werden.

Monomode-Fasern sind zwar hinsichtlich der Übertragung der Lichtintensität wesentlich günstiger, stellen jedoch erhöhte Anforderungen an die von der Beleuchtungsquelle aufzubringende Kohärenz der einzustrahlenden Lichtstrahlung.

Bezugszeichenliste

| | |
|---|---|
| 1 | Glasfasersensor |
| 2 | erste optische Faser |
| 3 | zweite optische Faser |
| 4 | eingekoppelte Strahlung |
| 5 | reflektierte Strahlung |
| 6 | Sensorkopf |
| 7 | Sensorende |
| 8 | auslenkbare Membran |
| 9 | erste Membranseite |
| 10 | zweite Membranseite |
| 11 | austretende Strahlung |
| 12 | Abstand Sensorkopf - auslenkbare Membran |
| | |
| 20 | konfokaler faseroptischer Sensor |
| 21 | Lichtquelle |
| 22 | Einkopplungsleitung Strahlung |
| 23 | Y-Koppler |
| 24 | Lichtleitfaser |
| 25 | Sensorkopf mit Linse |
| 26 | Gradientenindexlinse |
| 27 | erste Linsenstirnseite |
| 28 | zweite Linsenstirnseite |
| 29 | austretende Strahlung |
| 30 | reflektierte Strahlung |
| 31 | Linsenfassung |
| 32 | Symmetrieachse |
| 33 | Photodetektor |
| 34 | Signalinterface |
| 35 | Auswertung |
| 36 | Außenhülse mit Gewinde |
| 37 | Membranteil |
| 38 | Innenhülse |
| 39 | Hohlraum |
| 40 | Presssitz |
| 41 | Anschlag |
| 42 | Klebverbindung Linse-Innenhülse |
| 43 | Stirnfläche Innenhülse |
| 44 | Raum (Brennraum) |
| | |
| 50 | Membran Ruhelage |
| 51 | Membran ausgelenkte Lage |
| 52 | Messbereich |
| 53 | Tiefenauflösung Sensor |
| 54 | Signal Maximum (100%) |

55    Signal (50%)
56    Kennlinienverlauf

M    Abbildungsmaßstab
a    Radius Lichtleitfaser 24
$A_N$    numerische Apertur Linse 26

**Patentansprüche**

1. Vorrichtung zur Erfassung des Druckes in einem Raum (44), wobei eine auslenkbare Membran (8, 37) in eine Begrenzungswand des Raumes (44) integriert ist und aus einer in einem Sensorkopf (25) angeordneten Lichtleitfaser (24) die auslenkbare Membran (8, 37) mit austretender Strahlung (29) bestrahlbar ist und reflektierte Strahlung (30) durch die auslenkbare Membran (8, 37) an die Lichtleitfaser (24) zurückwerfbar ist, **dadurch gekennzeichnet, dass** der Sensorkopf (25) eine zylinderstabförmige Linse (26) umfasst, über deren der Lichtleitfaser (24) zuweisende erste Seite (27) die von der auslenkbaren Membran (8, 37) reflektierte Strahlung (30) konfokal in die Lichtleitfaser (24) einkoppelbar ist, wobei die Vorrichtung weiterhin eine Auswertung (35) umfasst, welche Mittel zur Berechnung einer Auslenkung der auslenkbaren Membran (8, 37) aus einem Sensorsignal (55) der reflektierten Strahlung (30) durch Vergleich mit einem konfokalen Kennlinienverlauf (56) aufweist.

2. Vorrichtung gemäß Anspruch 1, **dadurch gekennzeichnet, dass** durch die Lichtleitfaser (24) Licht sowohl zum Sensorkopf (25) übertragbar ist als auch reflektierte Strahlung (30) als konfokales Messsignal an eine Kopplungseinrichtung (23) rückübertragbar ist.

3. Vorrichtung gemäß Anspruch 1, **dadurch gekennzeichnet, dass** die Linse (26) zylinderstabförmig als Gradientenindexlinse ausgeführt ist.

4. Vorrichtung gemäß Anspruch 1, **dadurch gekennzeichnet, dass** der Sensorkopf (25) eine die Lichtleitfaser (24) und die Linse (26) aufnehmende Innenhülse (38) aufweist.

5. Vorrichtung gemäß Anspruch 4, **dadurch gekennzeichnet, dass** die Innenhülse (38) des Sensorkopfes (25) von einer Außenhülse (36) umschlossen ist, die einen Membranteil (37) aufweist, welcher eine zweite Stirnseite (28) der Linse (26) in einem dem Messbereich (52) definierenden Abstand (12) gegenüberliegt.

6. Vorrichtung gemäß Anspruch 4, **dadurch gekennzeichnet, dass** die Lichtleitfaser (24) in einen mit Füllmaterial ausgefüllten Hohlraum (39) der Innenhülse (38) aufgenommen ist und einen der ersten Stirnseite (27) der Linse (26) zuweisende, gebrochene Faserendfläche aufweist und die Linse (26) mittels einer Klebeverbindung (31, 42) in der Innenhülse (38) aufgenommen ist.

7. Vorrichtung gemäß Anspruch 1, **dadurch gekennzeichnet, dass** die Vorrichtung so gestaltet ist, dass im Gebrauch das aus der Faserendfläche der Lichtleitfaser (24) austretende Licht (29) durch die Linse (26) in die Abbildungsebene der auslenkbaren Membran (8, 37) abbildbar ist und auf identischem Wege als reflektierte Strahlung (30) in die Lichtleitfaser (24) zurückwerfbar ist.

8. Vorrichtung gemäß Anspruch 1, **dadurch gekennzeichnet, dass** die Lichtleitfaser (24) mit genau einem Y-Koppler (23) verbunden ist, wobei über ein erstes Ende des Y-Kopplers (23) Licht aus einer Lichtquelle (21) in die mit einem zweiten Ende des Y-Kopplers (23) verbundene Lichtleiterfaser (24) einkoppelbar ist, und wobei über ein drittes Ende des Y-Kopplers (23) die von der auslenkbaren Membran (8, 37) reflektierte Strahlung (30) aus der Lichtleiterfaser einem Photodetektor (33) zuführbar ist.

9. Verfahren zur Erfassung des Druckes in einem Raum (44), mit folgenden Schritten:

   - Licht aus einer Lichtquelle (21) wird mittels einer Lichtleiterfaser (24) und einer Linse (26), insbesondere einer zylinderstabförmigen Linse (26), auf eine in eine Begrenzungswand des Raumes (44) integrierte, auslenkbare Membran (8,_37) fokussiert;
   - von der auslenkbaren Membran (8, 37) reflektierte Strahlung (30) wird konfokal von der Linse (26), insbesondere der zylinderstabförmigen Linse (26), wieder in die Lichtleiterfaser (24) eingekoppelt und zu einem Photodetektor (33) geleitet;
   - aus den Vorgegebenen konfokalen Eigenschaften der Anordnung der Lichtleiterfaser (24) und der Linse (26), insbesondere der zylinderstabförmigen Linse (26), wird ein konfokaler Kennlinienverlauf (56) berechnet; und
   - durch Vergleich eines Sensorsignals (55) des Photodetektors (33) mit dem berechneten konfokalen Kennlinienverlauf (56) wird eine Auslenkung der auslenkbaren Membran (8, 37) berechnet.

**Claims**

1. Apparatus for detecting the pressure in a chamber (44), a deflectable diaphragm (8, 37) being integrated in a boundary wall of the chamber (44) and it being possible to irradiate the deflectable diaphragm (8, 37) with emanating radiation (29) from an optical fibre (24) arranged in a sensor head (25), and it being possible for reflected radiation (30) to be retroreflected by the deflectable diaphragm (8, 37) to the optical fibre (24), **characterized in that** the sensor head (25) comprises a lens (26) in the shape of a cylindrical rod via whose first end (27), which faces the optical fibre (24), the radiation (30) reflected by the deflectable diaphragm (8, 37) can be coupled confocally into the optical fibre (24), the device further comprising an evaluation unit (35) which has means for calculating a deflection of the deflectable diaphragm (8, 37) from a sensor signal (55) of the reflected radiation (30) by comparison with a confocal characteristic profile (56).

2.  Apparatus according to Claim 1, **characterized in that** the optical fibre (24) can be used to transmit light to the sensor head (25), and to transmit reflected radiation (30) as a confocal measuring signal back to a coupling device (23).

3.  Apparatus according to Claim 1, **characterized in that** the lens (26) is designed as a gradient index lens in the shape of a cylindrical rod.

4.  Apparatus according to Claim 1, **characterized in that** the sensor head (25) has an inner sleeve (38) holding the optical fibre (24) and the lens (26).

5.  Apparatus according to Claim 4, **characterized in that** the inner sleeve (38) of the sensor head (25) is surrounded by an outer sleeve (36) which has a diaphragm part (37) which is situated opposite a second end face (28) of the lens (26) at a distance (12) defining the measuring range (52).

6.  Apparatus according to Claim 4, **characterized in that** the optical fibre (24) is held in a cavity (39) of the inner sleeve (38) which is filled with a filling material, and has a broken fibre end surface facing the first end face (27) of the lens (26), and the lens (26) is held in the inner sleeve (38) by means of a bonded joint (31, 42).

7.  Apparatus according to Claim 1, **characterized in that** the device is fashioned such that when it is in use the light (29) emerging from the fibre end surface of the optical fibre (24) can be projected by the lens (26) into the imaging plane of the deflectable diaphragm (8, 37), and can be retroreflected in an identical way as reflected radiation (30) into the optical fibre (24).

8.  Apparatus according to Claim 1, **characterized in that** the optical fibre (24) is connected to precisely one Y coupler (23), it being possible via a first end of the Y coupler (23) to couple light from a light source (21) into the optical fibre (24) connected to a second end of the Y coupler (23), and it being possible via a third end of the Y coupler (23) to feed the radiation (30) reflected by the deflectable diaphragm (8, 37) from the optical fibre to a photodetector (33).

9.  Method for detecting the pressure in a chamber (44), having the following steps:

    - by means of an optical fibre (24) and a lens (26), in particular a lens (26) in the shape of a cylindrical rod, light from a light source (21) is focussed onto a deflectable diaphragm (8, 37) integrated in a boundary wall of the chamber (44);
    - radiation (30) reflected by the deflectable diaphragm (8, 37) is confocally coupled again into the optical fibre (24) by the lens (26), particularly the lens (26) in the shape of a cylindrical rod, and conducted to a photodetector (33) ;
    - a confocal characteristic profile (56) is calculated from the prescribed confocal properties of the arrangement of the optical fibre (24) and of the lens (26), in particular the lens (26) in the shape of a cylindrical rod; and
    - a deflection of the deflectable diaphragm (8, 37) is calculated by comparing a sensor signal (55) of the photodetector (33) with the calculated confocal characteristic profile (56).

### Revendications

1.  Dispositif de saisie de la pression dans un volume (44), comportant une membrane déformable (8, 37) intégrée dans une cloison délimitant le volume (44) et une fibre optique (24) installée dans une tête de capteur (25), cette fibre irradiant la membrane déformable (8, 37) avec un rayonnement émis (29) pour réfléchir le rayonnement (30) par la membrane déformable (8, 37) vers la fibre optique (24), **caractérisé en ce que** la tête de capteur (25) comporte une lentille (26) en forme de tige cylindrique pour injecter à son premier côté (27) tourné vers la fibre optique (24), le rayonnement (30) réfléchi par la membrane déformable (8, 37), de manière confocale dans la fibre optique (24), le dispositif comportant en outre un circuit d'exploitation (35) comportant des moyens pour calculer une déviation de la membrane déformable (8, 37) à partir du signal (55) fourni par le capteur et correspondant au rayonnement réfléchi (30), par comparaison avec une courbe caractéristique confocale (56).

2.  Dispositif selon la revendication 1, **caractérisé en ce que**

la fibre optique (24) transmet à la fois vers la tête de capteur (25) la lumière et le rayonnement réfléchi (30) comme signal de mesure confocal en retour à une installation de couplage (23).

**3.** Dispositif selon la revendication 1,
**caractérisé en ce que**
la lentille (26) est en forme de tige cylindrique constituant une lentille à gradient d'indice.

**4.** Dispositif selon la revendication 1,
**caractérisé en ce que**
la tête de capteur (25) comporte un manchon intérieur (38) recevant la fibre optique (24) et la lentille (26).

**5.** Dispositif selon la revendication 4,
**caractérisé en ce que**
le manchon intérieur (38) de la tête de capteur (25) est entouré par un manchon extérieur (36) comportant une partie de membrane (37) en regard de laquelle se trouve une seconde face frontale (28) de la lentille (26) à une distance (12) définissant la plage de mesure (52).

**6.** Dispositif selon la revendication 4,
**caractérisé en ce que**
la fibre optique (24) est logée dans une cavité (39) du manchon intérieur (38), remplie d'une matière et comporte une surface d'extrémité de fibre, cassée, tournée vers la première face frontale (27) de la lentille (26) et la lentille (26) est logée dans le manchon intérieur (38) à l'aide d'une liaison collée (31, 42).

**7.** Dispositif selon la revendication 1,
**caractérisé en ce qu'**
il est conçu pour qu'en fonctionnement, la lumière (29) sortant de la surface d'extrémité de la fibre optique (24) donne une image par la lentille (26) dans le plan image de la membrane déformable (8, 37) et soit renvoyée suivant le chemin identique comme rayonnement réfléchi (30) dans la fibre optique (24).

**8.** Dispositif selon la revendication 1,
**caractérisé en ce que**
la fibre optique (24) est reliée précisément à un coupleur Y (23),
une première extrémité du coupleur Y (23) recevant la lumière d'une source lumineuse (21) dans une fibre optique (24) reliée à la seconde extrémité du coupleur en Y (23), et
le rayonnement (30) provenant de la fibre optique réfléchi par la membrane déformable (8, 37) est appliqué à la troisième extrémité du coupleur en Y (23) pour être envoyé à un photo détecteur (33).

**9.** Procédé de détection de la pression dans un volume (44) comprenant les étapes suivantes :

- on focalise la lumière d'une source lumineuse (21) à l'aide d'une fibre optique (24) et d'une lentille (26) notamment une lentille en forme de tige cylindrique (26) sur une membrane déformable (8, 37) intégrée dans une cloison délimitant le volume (44),
- le rayonnement (30) réfléchi par la membrane déformable (8, 37) est de nouveau injecté de manière confocal par la lentille (26) notamment la lentille (26) en forme de tige cylindrique dans la fibre optique (24) pour être envoyé à un photo détecteur (33),
- à partir des propriétés confocales prédéfinies du montage de la fibre optique (24) et de la lentille (26) notamment de la lentille en forme de tige cylindrique (26) on calcule une caractéristique confocale (56), et
- par comparaison d'un signal de capteur (55) du photo détecteur (33) et de la courbe caractéristique confocale (56) calculée on détermine le débattement de la membrane déformable (8, 37).

## Fig. 1

## Fig. 2

## Fig. 3

## Fig. 4